# EUROPÄISCHE PATENTSCHRIFT

(11) **EP 1 018 021 B1**
(45) Veröffentlichungstag und Bekanntmachung des Hinweises auf die Patenterteilung: **14.01.2004**
(21) Anmeldenummer: 99932828.9
(22) Anmeldetag: 06.07.1999
(51) Int. Cl.: G01P 3/489

(54) **ELEKTRISCHER GEBER MIT EINEM SENSORELEMENT ZUR ERFASSUNG EINER BEWEGUNG**
ELECTRIC SENSOR WITH A SENSOR ELEMENT TO DETECT A MOVEMENT
CAPTEUR ELECTRIQUE COMPORTANT UN ELEMENT DETECTEUR POUR DETECTER UN MOUVEMENT

(30) Priorität: 23.07.1998 DE 19833116
(43) Veröffentlichungstag der Anmeldung: 12.07.2000
(73) Patentinhaber: SIEMENS AKTIENGESELLSCHAFT, 80333 München (DE)
(72) Erfinder: GRILL, Thomas, D-78048 Villingen-Schwenningen (DE); HANKE, Klaus-Dieter, D-78052 Villingen-Schwenningen (DE); WANGLER, Josef, D-78052 Villingen-Schwenningen (DE)
(86) Internationale Anmeldenummer: PCT/EP1999/004690
(87) Internationale Veröffentlichungsnummer: WO 2000/005588

(56) Entgegenhaltungen:
- DE-A1- 19 610 161
- DE-A1- 19 618 867
- DE-A1- 19 634 715
- US-A- 4 450 403
- US-A- 5 345 171

## Beschreibung

Die Erfindung betrifft einen elektrischen Geber mit einem Sensorelement zur Erfassung einer Bewegung gemäß dem Oberbegriff des ersten Anspruchs. Im besonderen bezieht sich die Erfindung auf einen Impulsgeber nach der in der Druckschrift DE 196 10 161 A1 offenbarten Bauart (siche auch DE 196 18 867), der im Zusammenwirken mit einem in einem Fahrzeug angeordneten Kontrollgerät der Erfassung der Fahrzeuggeschwindigkeit dient. Dort wird ein Impulsgeber beschrieben, der mit einem Speicher, mit einer Kodierschaltung und vorzugsweise mit einem Mikrocontrollersystem ausgestattet ist, um ein Signal, das von einem im Impulsgeber angeordneten Sensorelement generiert wird und zur Fahrzeuggeschwindigkeit proportional ist, nicht nur über eine konventionelle Signalleitung, sondern zusätzlich auch verschlüsselt über eine Datenleitung an das mit dem Impulsgeber verbundene Kontrollgerät zu übertragen.

Impulsgeber dieser Bauart werden üblicherweise in ein Getriebe eingeschraubt, welches sich im Antriebsstrang des Fahrzeugs befindet. Alternativ zur Schraubbefestigung kann der Impulsgeber aber auch in eine Getriebewandung eingesteckt und dann mit Halterungselementen und Schraubmitteln befestigt werden. Das Sensorelement des Impulsgebers ist auf ein im Getriebe befindliches Geberrad gerichtet, wobei als Geberrad in der Regel ein Zahnrad des Getriebes verwendet wird. Geberrad und Sensorelement befinden sich dabei in engem Abstand zueinander. Während der Rotation des Zahnrades generiert das im Impulsgeber befindliche Sensorelement durch den Wechsel von Zahn und Zahnlücke ein zur Drehgeschwindigkeit des Zahnrades proportional moduliertes elektrisches Signal. Als Sensorelement wird häufig ein Hallelement gewählt.

In der Praxis besteht oft die Anforderung, nicht nur die Drehgeschwindigkeit des Geberrades zu erfassen, sondern auch eine Information über dessen Drehrichtung bereitzustellen. Das ist z.B. der Fall, wenn man eine Aussage zur Fahrtrichtung des Fahrzeugs machen möchte. Bisher wurde das Problem oftmals dadurch gelöst, daß ein zweiter Geber gleicher Bauart in das Getriebe eingebracht wurde. Diese Lösung ist jedoch teuer und kostet zusätzlichen Bauraum, wobei dieser in Fahrzeugen ohnehin knapp ist.

Nun sind in letzter Zeit Hall-IC-Sensorelemente bekannt geworden, die zusätzlich zum Geschwindigkeitsimpulssignal ein weiteres Ausgangssignal bereitstellen, das zwei logische Zustände besitzt, wobei der erste Zustand bei einer ersten Bewegungsrichtung und der zweite Zustand bei einer dazu entgegengesetzten Bewegungsrichtung des Gegenstandes angenommen wird. In Verbindung mit einem Geber der in Rede stehenden Bauart ist jedoch bei der Verwendung dieser neuen Hall-IC-Sensorelemente zu beachten, daß bei der geschilderten Meßanordnung die Ausrichtung des im Geber befindlichen Sensorelements zum Geberrad davon abhängt, unter welchem Drehwinkel der Geber in das Getriebe eingebracht wurde. Die Ausrichtung des Sensorelements zum Geberrad ist damit zunächst einmal unbestimmt, weil in der Regel am Gehäuse des Gebers keine Positioniermittel angebracht sind und aus Sicht des Geberherstellers zur Vermeidung von Gehäusevarianten auch nicht angebracht sein sollen. Damit geht einher, daß keine eindeutige Festlegung darin besteht, welcher logische Zustand des zuvor genannten Ausgangssignals des Sensorelements mit welcher Bewegungsrichtung des Geberrades verknüpft ist, solange die tatsächliche bei der gegebenen Meßanordnung vorliegende Zuordnung nicht am fest ins Getriebe eingebrachten Geber überprüft werden kann.

Überdies besteht das Problem, daß ein Geber der in Rede stehenden Bauart nur vier Anschlußleitungen besitzt. Im einzelnen sind dies zwei Leitungen für seine Stromversorgung, wobei diese beiden Leitungen der elektrischen Masse und der Betriebsspannung zugeordnet sind, ferner eine Signalleitung zur Übertragung des zur Drehgeschwindigkeit des Geberrades proportional modulierten elektrischen Signals sowie eine Datenleitung, um dieses Signal zusätzlich auch verschlüsselt an die mit dem Geber verbundene Datenerfassungseinrichtung zu übertragen. Aus Gründen der Kompatibilität zu bekannten Gebern und zu den in der Fahrzeugtechnik bereits verwendeten Leitungs- und Steckersystemen verbietet es sich, für ein weiteres Ausgangssignal des Sensorelements eine weitere Verbindungsleitung vom Geber zur Datenerfassungseinrichtung vorzusehen, um darüber eine Information über die Drehrichtung des Geberrades zu übertragen.

Darüber hinaus ist aus der Druckschrift DE 196 34 715 A1 eine Anordnung zur Erfassung des Drehverhaltens eines Rades oder eines anderen rotierenden Körpers bekannt, die ein Sensorelement und eine steuerbare Stromquelle, die einen das Drehverhalten darstellenden eingeprägten Strom (ein binäres Stromsignal) liefert, und eine Auswerteschaltung besitzt. Dabei ist ein Sensormodul vorgesehen, welches das Sensorelement, die Stromquelle und einen Modulator enthält, der in Abhängigkeit von den Signalen des Sensorelementes und von externen Signalen, die eine externe Signalquelle liefert bzw. die über einen zusätzlichen Anschluß eingespeist werden, die Stromquelle steuert und der als Ausgangssignal des Steuermoduls ein das Drehverhalten darstellendes Stromsignal mit einem überlagerten Status- oder Zusatzsignal hervorruft. Diese Anordnung stellt ihr Meßsignal, das mit dem Drehverhalten eines Rades korrespondiert, als ein Stromwechselsignal zur Verfügung. Diesem Meßsignal wird mit Hilfe des im Sensormodul angeordneten Modulators ein Status- oder Zusatzsignal überlagert, was durch Einfügen von Strompulsen in das die Drehzahlinformation enthaltene Frequenzsignal oder durch gewichtete Stromamplituden erfolgt. Diese Maßnahmen beruhen allesamt auf zwischen dem Sensormodul und der daran angeschlossenen Auswerteschaltung definierten Strompegeln oder Strompulsen. Damit die Auswerteschaltung das vom Sensormodul gesandte Meßsignal interpretieren kann, muß in der Auswerteschaltung die Bedeutung jedes Strompulses und der Strompegel hinterlegt sein. Die Bewertung des Meßsignals erfolgt also in der Auswerteschaltung auf der Grundlage der zuvor für ein spezifisches Signal getroffenen Bedeutungszuweisungen. Durch Umwelteinflüsse bedingte Abweichungen des Meßsignals von den getroffenen Definitionen führen unweigerlich zu Fehlinterpretationen. Daher ist diese Anordnung gegenüber temperatur- und/oder alterungsbedingten Driften des Strompegels wenig fehlertolerant, was aber im rauhen Milieu von Kraftfahrzeugen sehr nachteilig ist. Des weiteren erfordert die Anordnung nach DE 196 34 715 A1 eine exakte Ausrichtung des Sensorkörpers relativ zur Lesespur des Encoders, was zu den eingangs erwähnten Nachteilen beim Einbau eines solchen Gebers in das Getriebe eines Fahrzeugs führt.

Der Erfindung liegt daher die Aufgabe zugrunde, einen elektrischen Geber mit einem Sensorelement zur Erfassung einer Bewegung eines Geberrades aufzuzeigen, der in der Lage ist, über die bekannte vieradrige Verbindungsleitung einer Datenerfassungseinrichtung, mit der der Geber verbunden ist, zusätzlich zum Signal über die Drehgeschwindigkeit des Geberrades ein Signal über dessen Drehrichtung bereitzustellen. Insbesondere soll ein Geber für Fahrzeuge aufgezeigt werden, bei dem die Information über die Drehrichtung des Geberrades weitgehend unabhängig von der mechanischen Einbaulage des Gebers für beide Drehrichtungen eindeutig einer Fahrtrichtung des Fahrzeugs zugeordnet werden kann.

Die Aufgabe wird durch die Merkmale des ersten Anspruchs gelöst. Merkmale für vorteilhafte Ausgestaltungen und Weiterbildungen finden sich in den abhängigen Ansprüchen.

Ausgehend von einem elektrischem Geber, der ein Sensorelement zur Erfassung einer Bewegung eines vor dem Sensorelement angeordneten Gegenstandes besitzt, wobei das Sensorelement ein erstes Ausgangssignal A1 bereitstellt, das zwei logische Zustände L und H besitzt, wobei der erste Zustand L oder H bei der ersten Bewegungsrichtung und der zweite Zustand H oder L bei der dazu entgegengesetzten Bewegungsrichtung des Gegenstandes angenommen wird, zeichnet sich die gefundene Lösung dadurch aus,
- daß der Geber zumindest durch eine Leitung für seine Betriebsspannung UB und über eine Datenleitung D mit einer Datenerfassungseinrichtung verbunden ist,
- daß im Geber eine logische Schaltung vorgesehen ist, in der hinterlegt ist, welchen Bewegungsrichtungen des vor dem Sensorelement angeordneten Gegenstandes die logischen Zustände L und H des ersten Ausgangssignals A1 des Sensorelements zugeordnet sind,
- daß der Leitung für die Betriebsspannung UB des Gebers während einem der beiden Zustände L oder H des ersten Ausgangssignals A1 des Sensorelements im Geber eine elektrische Last R zugeschaltet wird, die den vom Geber aufgenommenen Strom IG gegenüber dem anderen Zustand H oder L sprunghaft um einen zusätzlichen Strom ID erhöht und
- daß die logische Schaltung der Datenerfassungseinrichtung über die Datenleitung D mitteilt, welche Bedeutung der erhöhte Strom auf der Leitung für die Betriebsspannung UB des Gebers hat.

Diese Lösung berücksichtigt die durch einen Impulsgeber nach DE 196 10 161 A1 vorgegebene Leitungskonfiguration für die Übertragung von Informationen an eine mit dem Geber verbundene Datenerfassungseinrichtung. Sie ermöglicht eine einfache nachrichtentechnische Auswertbarkeit des Signals, das auf der Leitung für die Betriebsspannung des Gebers ausgegeben wird. Mit einem solchen Geber kann jedoch zunächst einmal nur ein Richtungswechsel in der Bewegung des vor dem Geber angeordneten Gegenstandes detektiert werden. Das Hinzufügen weiterer Merkmale führt zu für die Praxis sehr vorteilhaften Weiterbildungen der gefundenen Lösung.

So ist der vor dem Sensorelement angeordnete Gegenstand vorzugsweise ein Geberrad, das aufgrund seiner Gestaltung während seiner Rotation im Sensorelement eine Folge elektrischer Impulse generiert, die vom Sensorelement als ein zweites zur Drehgeschwindigkeit proportionales Ausgangssignal ausgegeben werden. In besonderen Anwendungsfällen kann der vor dem Sensorelement angeordnete Gegenstand auch eine hin und her bewegte Zahnstange sein.

Bei einem Geber nach der in der Druckschrift DE 196 10 161 A1 offenbarten Bauart ist der Geber über eine Datenleitung mit der Datenerfassungseinrichtung verbunden. Nun wird vorgeschlagen, im Geber eine logische Schaffung vorzusehen, die vorzugsweise in Form eines Mikrocontrollers zu realisieren ist und die über diese Datenleitung mit der Datenerfassungseinrichtung verbunden ist, wodurch der Datenerfassungseinrichtung Informationen darüber zugänglich werden,
- ob ein erstes Ausgangssignal des Sensorelements vorhanden ist und
- ob im Fall des Vorhandenseins des erstes Ausgangssignals auch das zweite Ausgangssignal vorhanden ist.

Die mit den vorstehenden Abfragen verbundene Prüfung des Gebers identifiziert den Geber gegenüber der Datenerfassungseinrichtung auch hinsichtlich seiner Bauart, d. h. ob im Geber ein Sensorelement eingesetzt wurde, das über die Eigenschaften des beschriebenen ersten Ausgangssignals verfügt. Nachdem die Prüfungsergebnisse zu den Abfragen an die Datenerfassungseinrichtung übermittelt worden sind, kann die Datenerfassungseinrichtung Änderungen im Strompegel auf der Leitung für die Betriebsspannung des Gebers eindeutig interpretieren und den Strompegel bei Bedarf auf Plausibilität überprüfen. Die beiden Abfragen sind auch vor dem Hintergrund zu sehen, daß ein Richtungssignal natürlich nur in Verbindung mit einem vorhandenen Geschwindigkeitssignal Sinn macht. Ohne ein Geschwindigkeitssignal ist ein anstehendes Richtungssignal in seiner Bedeutung unbestimmt.

Bei dieser Ausgestaltung der Erfindung kann die im Geber vorgesehene logische Schaltung bei Bedarf auch den Zeitpunkt protokollieren, zu dem ein bestimmter Zustand des ersten Ausgangssignals des Sensorelements vorliegt. Ein besonderer Vorteil ist, daß in der im Geber vorgesehenen logischen Schaltung hinterlegt ist, welchen Bewegungsrichtungen des vor dem Sensorelement angeordneten Gegenstandes die logischen Zustände des ersten Ausgangssignals des Sensorelements zugeordnet sind. Alle Informationen, die von der im Geber vorgesehenen logischen Schaltung gewonnen werden oder dort hinterlegt sind, sollten von ihr vorzugsweise auch zwischenspeicherbar sein, um sie so für die mit dem Geber verbundene Datenerfassungseinrichtung abrufbar bereit zu halten.

Bei der bevorzugten Anwendung der Erfindung ist die mit dem Geber verbundene Datenerfassungseinrichtung ein Kontrollgerät für Nutzfahrzeuge, insbesondere ein Fahrtschreiber. In dieser konkreten Ausgestaltung befindet sich der Geber in einem Fahrzeug und ist zumindest durch eine Leitung für seine Betriebsspannung und durch eine Datenleitung mit der ebenfalls im Fahrzeug angeordneten Datenerfassungseinrichtung verbunden. Der Geber ist mit einem Sensorelement zur Erfassung der Drehzahl und Drehrichtung eines vor dem Sensorelement angeordneten Geberrades ausgestattet. Das erste Ausgangssignal des Sensorelements belastet in einem seiner beiden Zustände die Leitung für die Betriebsspannung des Gebers mit einer vorzugsweise ohmschen Last, wodurch auf dieser Leitung gegenüber dem anderen Zustand dieses Ausgangssignals des Sensorelements ein erhöhter Strom gezogen und dadurch der Pegel des vom Geber aufgenommenen Stromes mit einer Information über die Drehrichtung des Geberrades verknüpft wird. Im Geber ist ein Mikrocontroller vorgesehen,
- der das erste Ausgangssignal des Sensorelements erfaßt,
- der die Information aus dem ersten Ausgangssignal in einem Datenspeicher speichert, d.h. es wird gespeichert, welcher der beiden logischen Zustände gerade anliegt,
- und der diese Information auf Anforderung durch die mit dem Geber verbundene Datenerfassungseinrichtung über die Datenleitung an die Datenerfassungseinrichtung sendet.

Es ist vorgesehen, daß in einem zu dem Mikrocontroller gehörenden nicht flüchtigen Speicher, z.B. in einem Festwertspeicher, vorzugsweise programmtechnisch eine Information darüber hinterlegbar ist, welchen Bewegungsrichtungen des Geberrades bzw. welcher Fahrtrichtung des Fahrzeugs die logischen Zustände des ersten Ausgangssignals des Sensorelements bzw. der auf der Leitung für die Betriebsspannung des Gebers fließende, erhöhte Strom aufgrund der Anordnung des Gebers im Fahrzeug zugeordnet sind. Diese Information ist für die mit dem Geber verbundene Datenerfassungseinrichtung über die Datenleitung abrufbar. Im Bedarfsfall kann der Mikrocontroller durch das Setzen einer Zeitmarke oder in Verbindung mit einer Uhr auch protokollieren, zu welchem Zeitpunkt das erste Ausgangssignal des Sensorelements seinen logischen Zustand ändert.

Dieser Geber kann auch dahingehend erweitert werden, daß der Mikrocontroller auch das zweite Ausgangssignal des Sensorelements erfaßt und ermittelt, wieviele Impulse pro Zeiteinheit im zweiten Ausgangssignal des Sensorelements enthalten sind, und diese aus dem zweiten Ausgangssignal des Sensorelements gewonnene Information in dem Datenspeicher speichert und sie bedarfsweise, d.h. in der Regel auf Anforderung durch die mit dem Geber verbundene Datenerfassungseinrichtung über die Datenleitung an die Datenerfassungseinrichtung sendet. Um die Gültigkeit des ersten Ausgangssignals des Sensorelements zu prüfen, kann vorgesehen werden, daß der Mikrocontroller die Information aus dem ersten Ausgangssignal nur dann im Datenspeicher speichert, wenn auch das zweite Ausgangssignal vorhanden ist. In vielen Fällen wird auch eine Signalleitung vorgesehen sein, die das zweite Ausgangssignal des Sensorelements unmittelbar kontinuierlich in Echtzeit, d.h. wann immer dieses Ausgangssignal am Sensorelement ansteht, direkt an die mit dem Geber verbundene Datenerfassungseinrichtung überträgt.

Die gefundene Lösung hat den Vorteil, daß sie für die Übertragung der Information über die Drehrichtung des Geberrades keine zusätzliche Leitung zwischen dem Geber und der Datenerfassungseinrichtung erfordert, wenn diese Information zusätzlich zum Signal über die Drehgeschwindigkeit des Geberrades an die Datenerfassungseinrichtung übermittelt werden soll, sondern sie kommt mit den vier vorhandenen Verbindungsleitungen aus.

Vorteilhaft ist auch, daß die Zuordnung der beiden logischen Zustände des ersten Ausgangssignals des Sensorelements zu den Bewegungsrichtungen des Geberrades erst dann zu erfolgen braucht, nachdem der Geber in das Getriebe des Fahrzeugs eingebracht worden ist. Bei der Einbringung des Gebers in das Getriebe ist eine strenge Ausrichtung des Sensorelements zum Geberrad nicht erforderlich. Solange das Sensorelement des Gebers überhaupt in der Lage ist, eine Bewegung des Geberrades zu detektieren, kann eine eindeutige Interpretation der vom Geber bereitgestellten Informationen beispielsweise durch eine einfache Anpassung der auswertenden Software erfolgen. Dadurch wird der Geber weitgehend unabhängig von seinem Einschraubwinkel im Getriebe des Fahrzeugs, wenn man einmal davon absieht, daß es einige wenige Winkelstellungen gibt, bei denen der Geber aufgrund einer ungünstigen Ausrichtung seines Sensorelements zum Geberrad nicht funktioniert. Wenn dieser Fall erkannt wird, ist der Einschraubwinkel des Gebergehäuses meist nur geringfügig zu verändern, um eine eindeutige Funktion mit reproduzierbaren Ergebnissen sicherzustellen.

In der Praxis bedeutet das, daß - wann immer der Geber funktioniert - die beiden logischen Zustände des ersten Ausgangssignals des Sensorelements erst nach dem Einbau des Gebers ins Fahrzeug den Fahrtrichtungen des Fahrzeugs durch eine einfache Programmeinstellung zugeordnet werden, wobei diese Programmeinstellung bei der Initialisierung der Datenerfassungseinrichtung vorgenommen werden kann. Denn es kann leicht festgestellt werden, ob bei der Vorwärts- oder Rückwärtsfahrt des Fahrzeugs der auf der Leitung für die Betriebsspannung des Gebers gezogene Strom gegenüber der anderen Fahrtrichtung erhöht ist. In Kenntnis des Stromverhaltens während der Fahrzeugbewegung kann für das betreffende Fahrzeug eine eindeutige Festlegung bezüglich der Bedeutung des ersten Ausgangssignals des Sensorelements getroffen werden, die erst wieder einer Überprüfung bedarf, wenn der Geber ausgetauscht oder sein Einschraubwinkel verändert wird.

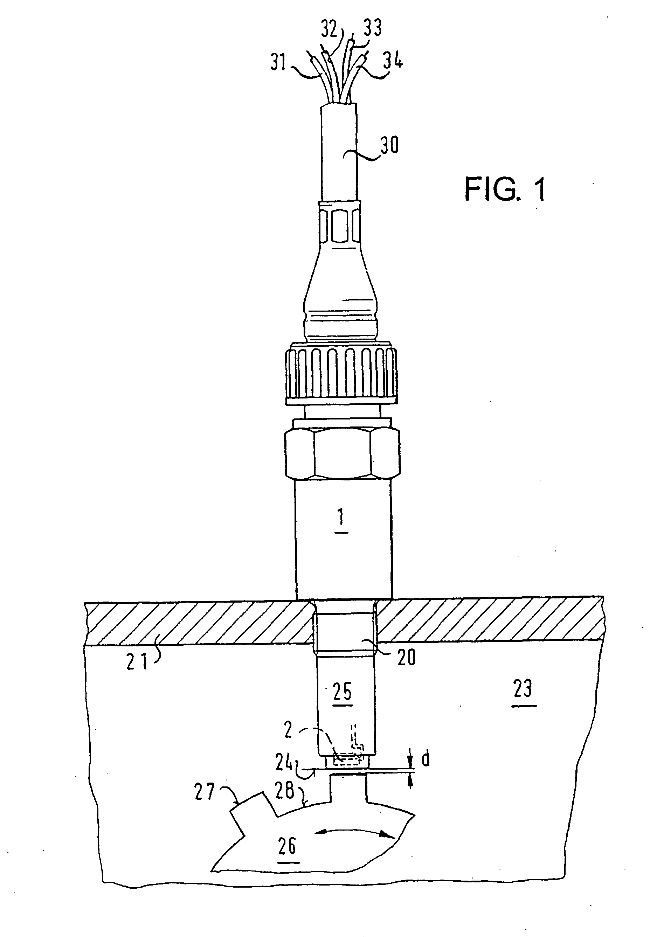

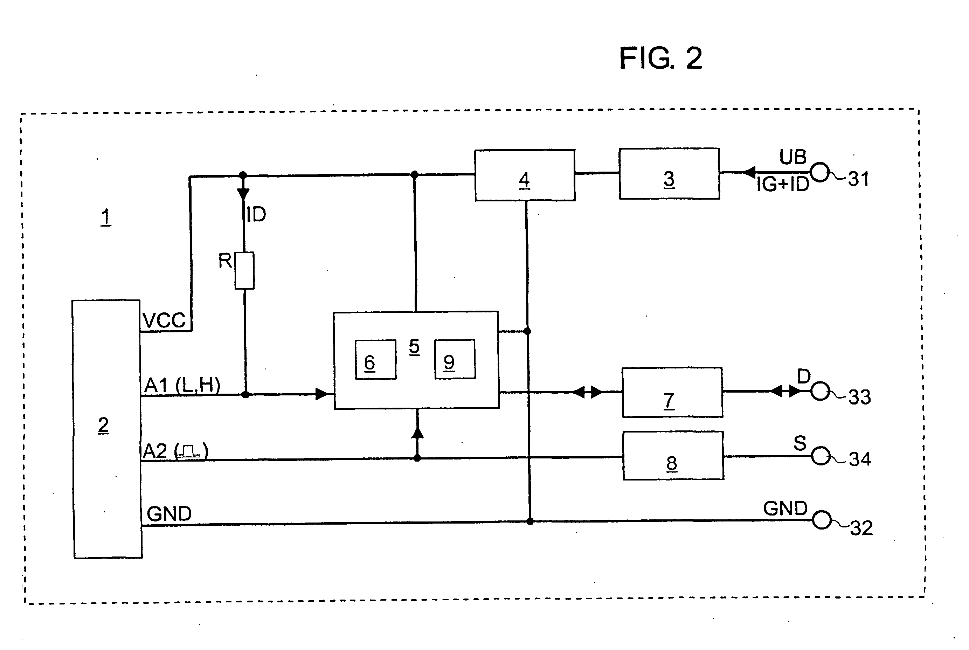

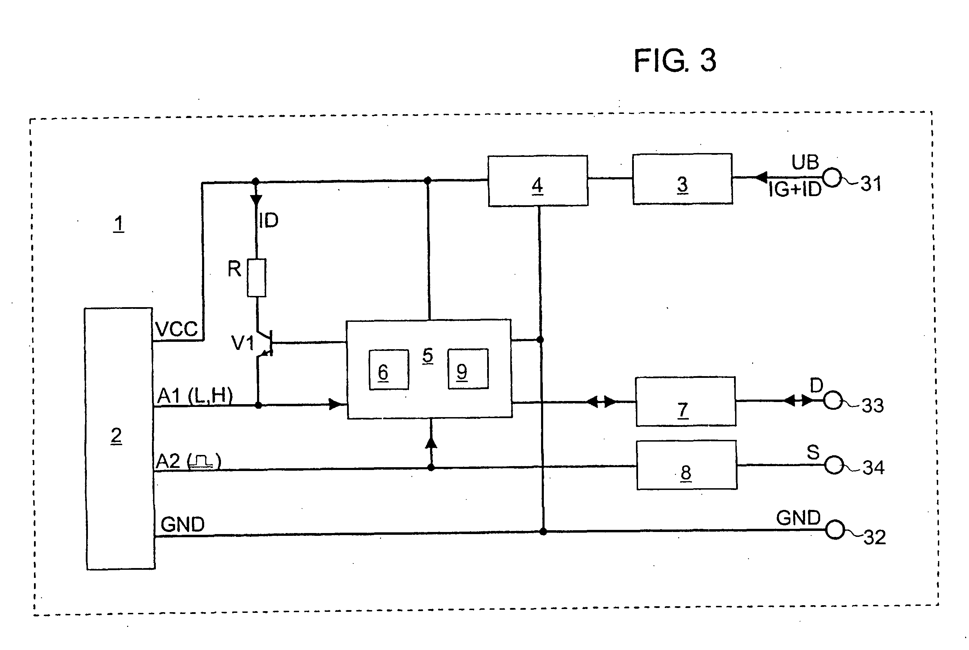

Anhand von fünf Figuren soll die Erfindung nun noch näher erläutert werden. Dabei zeigt die Figur 1 eine übliche Anordnung des Gebers in der Gehäusewand eines Getriebes. Figur 2 verdeutlicht dann den grundsätzlichen Aufbau einer Schaltungsanordnung zur Realisierung der Erfindung. Die Figuren 3 bis 5 zeigen vorteilhafte Varianten zur Schaltungsanordnung gemäß Figur 2.

Gemäß der **Figur 1** ist der elektrische Geber 1 mittels seines Schraubgewindes 20 in die Gehäusewand 21 eines Getriebes 23 eingeschraubt. Die Stirnseite 24 des Geberschaftes 25 ist auf den Umfangskreis eines im Getriebe 23 befindlichen Geberrades 26 gerichtet. Das Geberrad 26 ist als Zahnrad ausgebildet, dessen Zähne 27 sich in engem Abstand d an der Stirnseite 24 des Geberschaftes 25 vorbeibewegen, wobei für das Zahnrad beide Drehrichtungen (vorwärts / rückwärts) zulässig sein sollen. Innenseitig im Geber 1 ist an der Stirnseite 24 des Geberschaftes 25 ein Sensorelement 2 angeordnet, das während der Rotation des Geberrades 26 durch den Wechsel von Zahn 27 und Zahnlücke 28 ein zur Drehgeschwindigkeit des Zahnrades proportional moduliertes elektrisches Signal A2 generiert. Dieses Signal A2 leitet der Geber 1 nach einer geeigneten elektrischen Aufbereitung an eine in der Figur 1 nicht dargestellte Datenerfassungseinrichtung 29 weiter, wobei der Geber 1 und die Datenerfassungseinrichtung 29 durch ein aus vier Leitungen 31, 32, 33 und 34 bestehendes Kabel 30 miteinander verbunden sind. Die Leitungen 31 und 32 dienen dabei der Stromversorgung des Gebers 1, wobei die Leitung 31 dem Geber 1 seine Betriebsspannung UB zuführt und die Leitung 32 der elektrischen Masse GND zugeordnet ist. Die Leitung 34 dient als Signalleitung S zur Übertragung des zur Drehgeschwindigkeit des Geberrades 26 proportional modulierten elektrischen Signals A2. Ferner ist eine Leitung 33 mit der Funktion einer Datenleitung D vorgesehen, um sowohl das Signal A2 als auch weitere Informationen in Form eines verschlüsselten Datenstromes an die mit dem Geber 1 verbundene Datenerfassungseinrichtung 29 zu übertragen.

Die **Figur 2** zeigt nun einige elektronische Funktioneinheiten des Gebers 1. Über die beiden Leitungen 31 und 32 wird der Geber 1 stromversorgt. Die dem Geber 1 von der in dieser Figur nicht dargestellten Datenerfassungseinrichtung 29 durch die Leitung 31 zugeführte Betriebsspannung UB wird zunächst über eine vor Überspannung und Kurzschluß schützende Schutzbeschaltung 3 geführt und danach auf einen Spannungsregler 4 gegeben. Die am Ausgang des Spannungsreglers 4 anstehende geregelte Betriebsspannung VCC versorgt das Sensorelement 2 sowie die übrigen elektronischen Funktioneinheiten des Gebers 1 mit der nötigen elektrischen Energie.

In dem dargestellten Fall hat das Sensorelement 2 vier Anschlüsse, nämlich einen für die geregelte Betriebsspannung VCC, einen für die elektrische Masse. GND, einen für ein erstes Ausgangssignal A1, das zwei logische Zustände L und H besitzt, wobei der erste Zustand L oder H mit der ersten Bewegungsrichtung (z.B. Rechtslauf) und der zweite Zustand H oder L mit der dazu entgegengesetzten Bewegungsrichtung (z.B. Linkslauf) des Geberrades 26 verknüpft ist, und einen für ein zweites Ausgangssignal A2, das aus einer Folge von Impulsen besteht, wobei die Anzahl der Impulse pro Zeiteinheit zur Drehgeschwindigkeit des Geberrades 26 proportional ist.

Das zweite Ausgangssignal A2, das aus einer Folge von Impulsen besteht, wird einer geeigneten Ausgangsschaltung 8 zugeführt, um es soweit aufzubereiten, daß es über die als Signalleitung S dienende Leitung 34 an die mit dem Geber 1 verbundene Datenerfassungseinrichtung 29 gesandt werden kann. Im Geber 1 ist auch ein Mikrocontroller 5 vorgesehen, dem sowohl das erste Ausgangssignal A1 als auch das zweite Ausgangssignal A2 zugeführt werden. Die Informationen aus beiden Ausgangssignalen A1 und A2 werden vom Mikrocontroller 5 in einem mit ihm verbundenen Datenspeicher 6 gespeichert und können bei Bedarf, z.B. nach Aufforderung durch die mit dem Geber 1 verbundene Datenerfassungseinrichtung 29 als verschlüsselter Datenstrom aus dem Datenspeicher 6 über die als Datenleitung D ausgebildete Leitung 33 an die Datenerfassungseinrichtung 29 übertragen werden, nachdem dieser Datenstrom - ebenso wie auch zuvor das kontinuierlich über die Signalleitung S übertragene zweite Ausgangssignal A2 - in einer geeigneten Ausgangsschaltung 7 transportfähig aufbereitet worden ist. Die genannten Ausgangsschaltungen 7 und 8 werden durch geeignete Treiber realisiert, die die Signale des Sensorelements 2 bzw. die des Mikrocontrollers 5 soweit verstärken, das in dem rauhen Milieu, in dem der Geber 1 eingesetzt wird, eine zuverlässige Signalübertragung an die Datenerfassungseinrichtung 29 sichergestellt ist. Weil die Informationen, die in dem zum Mikrocontroller 5 gehörenden Datenspeicher 6 vorgehalten werden, durch die Datenerfassungseinrichtung 29 abrufbar sein sollen, ist die Datenleitung D bidirektional ausgebildet, wohingegen über die Signalleitung S die zur Drehgeschwindigkeit des Geberrades 26 proportionalen Impulse nur von seiten des Gebers 1 kontinuierlich an die Datenerfassungseinrichtung 29 übertragen werden. Das über die Signalleitung S übertragene Signal wird deshalb als ein Echtzeitsignal bezeichnet, weil es jederzeit über den gerade aktuellen Meßwert Auskunft gibt.

Das erste vom Sensorelement 2 abgegebene Ausgangssignal A1 mit den beiden logischen Zuständen L und H wird erfindungsgemäß auch dazu benutzt, über eine im Geber 1 vorgesehene elektrische Last bei einem dieser beiden Zustände auf der für die Betriebsspannung UB vorgesehenen Leitung 31 einen gegenüber dem anderen Zustand erhöhten Strom zu ziehen. Zu dem für den Geberbetrieb erforderlichen Grundstrom IG addiert sich während eines dieser beiden logischen Zustände L oder H durch den Stromfluß aufgrund der zugeschalteten Last ein zusätzlicher Strom ID, der von der mit dem Geber 1 verbundenen Datenerfassungseinrichtung 29 als eine sprunghafte Änderung leicht detektiert werden kann. Im einfachsten Fall wird diese Last, wie in der Figur 2 dargestellt, durch einen ohmschen Widerstand R realisiert. Auch der Strompegel IG bzw. IG + ID auf der für die Betriebsspannung UB vorgesehenen Leitung 31 ist demnach ein Echtzeitsignal, weil dadurch zu jedem Zeitpunkt die Drehrichtungsinformation bereit gestellt wird.

Die Schaltungsanordnungen gemäß den Figuren 3 bis 5 unterscheiden sich von derjenigen in der Figur 2 nur in der Art der Aufschaltung der zusätzlichen Last, denn bei diesen Weiterentwicklungen wird die der Betriebsspannung UB aufzuschaltende Last von dem im Geber 1 befindlichen Mikrocontroller 5 gesteuert. Nach dem Vorschlag der Figur 3 erfolgt die Aufschaltung des Widerstands R durch ein mit dem Mikrocontroller 5 verbundenes Schaltelement V1, das ein bipolarer Transistor sein kann. Diese Vorgehensweise hat gegenüber der direkten Aufschaltung durch das Ausgangssignal A1 des Sensorelements 2 den Vorteil, daß der zusätzliche Strom ID abschaltbar ist, wodurch Energie gespart wird. Die Abschaltbarkeit des zusätzlichen Stromes ID ist deshalb vorteilhaft, weil dieser Strom ID während eines Fahrzeugstillstandes keinen Informationsgewinn bedeutet. Da gattungsgemäße Geber in Fahrzeugen Betriebstemperaturen bis zu 150 °C ausgesetzt sein können, sind alle Maßnahmen günstig, die eine unnötige Stromaufnahme des Gebers vermeiden, weil die Stromaufnahme auch immer im Zusammenhang mit der von der Geberelektronik produzierten Stromwärme zu betrachten ist. So trägt die Einsparung des Stromes ID während eines Fahrzeugstillstandes in sinnvoller Weise zu einer Reduktion der Stromwärme bei, insbesondere in Anwendungsfällen, bei denen die grundlegende Stromversorgung des Gebers aus funktionalen Gründen zu keinem Zeitpunkt, auch nicht durch ein Ausschalten der Zündung des Fahrzeugs abgeschaltet werden darf.

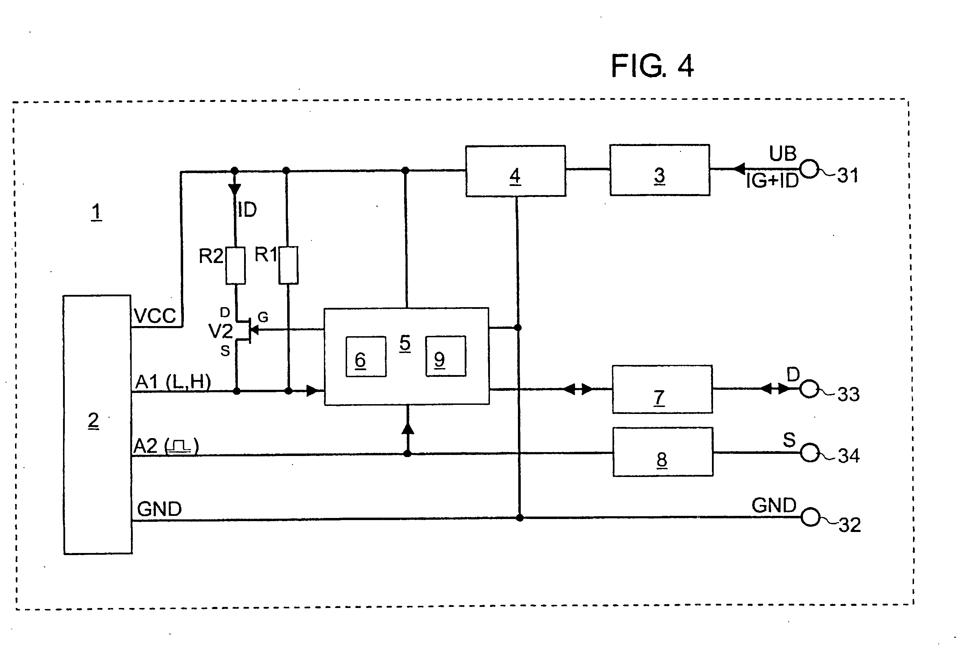

Die Figur 4 zeigt - wie in der Figur 2 - zunächst einen direkt durch das Ausgangssignal A1 des Sensorelements 2 aufschaltbaren Widerstand R1. Parallel dazu befindet sich ein mit einem Vorwiderstand R2 versehener, durch den Mikrocontroller 5 steuerbarer, selbstleitender Feldeffekt-Transistor V2 in Öffnerfunktion für den Fall einer Störung des Mikrocontrollers 5. Bei geeigneter Dimensionierung von R1 und R2 hat diese Variante den Vorteil, daß im Normalbetrieb der größere Stromanteil durch den mit dem Widerstand R2 versehenen Zweig fließt, daß jedoch auch bei einem Ausfall des Mikrocontrollers 5 die von dem Ausgangssignal A1 ableitbare Drehrichtungsinformation durch den Stromfluß durch den Widerstand R1 auf der Leitung 31 zur Verfügung steht.

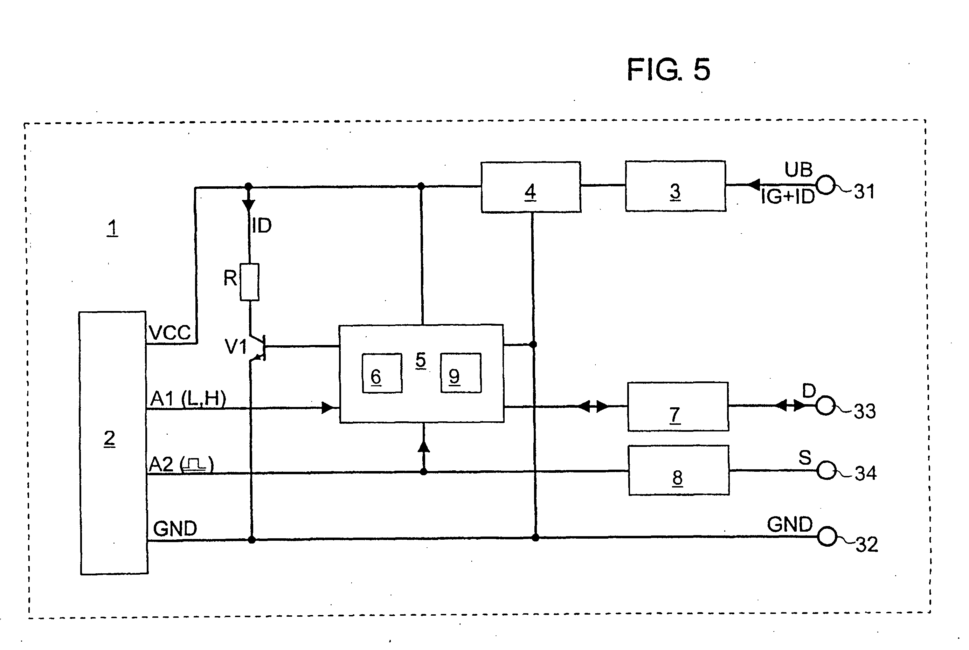

In der Schaltungsanordnung nach der Figur 5 wird nochmals an den Realisierungsvorschlag von der Figur 2 angeknüpft, jedoch geht nun das Ausgangssignal A1 des Sensorelements ausschließlich zum Mikrocontroller 5. Der Mikrocontroller 5 wertet das Ausgangssignal A1 des Sensorelements aus und steuert dann nach bestimmten programmtechnisch hinterlegten Vorgaben das Schaltelement V1 an, um die Leitung 31 mit einem zusätzlichen Strom ID zu beaufschlagen. Diese Variante erlaubt es, die tatsächlich an ihm anliegenden logischen Zustände L oder H des ersten Ausgangssignals A1 des Sensorelements 2 gegebenenfalls zunächst zu invertieren oder nach bestimmten Vorgaben zu überprüfen und anzupassen, bevor der Mikrocontroller 5 den von ihm steuerbaren Widerstand R - oder in Verbindung mit der Figur 4 auch den Widerstand R2 - der Leitung 31 zuschaltet. Auf diese Weise kann erreicht werden, daß immer derjenige logische Zustand L oder H des Ausgangssignals A1 den erhöhten Stromfluß verursacht, der aufgrund seiner Verknüpfung mit der Drehrichtung des Geberrades 26 bzw. mit der Fahrtrichtung des Fahrzeugs über die kürzere Betriebsdauer gültig ist, was im Hinblick auf die Stromwärme, die durch den vom Geber insgesamt aufgenommenen Strom erzeugt wird, sehr vorteilhaft ist.

Somit unterscheiden sich die hier beispielhaft aufgezeigten Varianten der gefundenen Lösung darin,
- daß in der Schaltungsanordnung gemäß der Figur 2 der Mikrocontroller 5 die Richtungsinformation nur zusätzlich zur direkten Aufschaltung des Stromsignals auf die Leitung 31 auswertet,
- daß in der Schaltungsanordnung gemäß der Figur 3 der Mikrocontroller 5 die Möglichkeit hat, die Richtungsinformation zu deaktivieren,
- daß die Schaltungsanordnung gemäß der Figur 4 aufzeigt, wie die Richtungsinformation auch bei einer Störung des Mikrocontrollers 5 erhalten bleibt,
- und wie in der Schaltungsanordnung gemäß der Figur 5 der Mikrocontroller 5 aktiv in den Signalpfad des vom Sensorelement 2 bereitgestellten Ausgangssignals A1 eingreift und allein bestimmend die Aufschaltung der Drehrichtungsinformation steuert.

Die in den Figuren 2 bis 5 gezeigten Schaltungsanordnungen stellen der mit dem Geber 1 verbundenen Datenerfassungseinrichtung 29 die mit der Drehrichtung des Geberrades 26 verknüpfte Information sowohl in Echtzeit als auch innerhalb eines abrufbaren Datenstromes zur Verfügung. In Echtzeit wird diese Information durch ein Vorhandensein oder Nicht-Vorhandensein des Stromes ID angezeigt. Durch den Einsatz des Mikrocontrollers 5 wird diese Information zusätzlich in digitaler Form vorgehalten, wodurch die Interpretierbarkeit des Strompegels auf der Leitung 31 deutlich verbessert wird. Denn unter den üblichen Einsatzbedingungen eines gattungsgemäßen Gebers 1 in einem Fahrzeug muß mit erheblichen thermischen und auch alterungsbedingten Driften des Strompegels auf der Leitung 31 gerechnet werden, so daß für eine sichere Interpretation des Strompegels ein hoher Absolutwert für den Strom ID erforderlich wäre, wenn keine Möglichkeit bestünde, die Bedeutung des Strompegels hinsichtlich seines Informationgehaltes anderweitig zu überprüfen. Wie jedoch bereits zuvor erläutert wurde, verbietet sich im Geber eine hohe Stromaufnahme aufgrund der damit einhergehenden Stromwärme, so daß die erfindungsgemäße Lösung einen Kömpromiß gefunden hat zwischen einer Bereitstellung der mit der Drehrichtung des Geberrades 26 verknüpften Information in Form eines jederzeit in Echtzeit verfügbaren Strompegelsignals und andererseits einer nicht allzu großen Stromerhöhung für diese Bereitstellung bei gleichzeitig hoher Sicherheit für die Interpretierbarkeit des vorhandenen Strompegels. Selbst wenn erhebliche thermische oder alterungsbedingte Driften den StrompegellG bzw. IG + ID auf der Leitung 31 überlagern sollten, kann die aktuelle Bedeutung des Strompegels eindeutig der im Datenspeicher 6 hinterlegten Information entnommen werden. Andererseits muß die im Datenspeicher 6 hinterlegte Information nicht ständig von der Datenerfassungseinrichtung 29 abgerufen werden, um die in Echtzeit auf der Leitung 31 zur Verfügung gestellte Drehrichtungsinformation zu interpretieren, weil sich thermische und alterungsbedingte Driften zeitlich nur langsam verändern.

Die vorgeschlagene Lösung hat auch den Vorteil, daß die mit dem Geber 1 verbundene Datenerfassungseinrichtung 29 nicht notwendigerweise den Grundpegel des Betriebsstromes IG für den Geber 1 messend ermitteln muß, sondern lediglich erkennen muß, ob durch die Zuschaltung der Last R und den damit einhergehenden durch den Strom ID entstandenen Mehrbedarf eine sprunghafte Änderung im Strompegel auf der Leitung 31 erfolgt.

Falls in einem mit dem Mikrocontroller 5 verbundenen nicht flüchtigen Speicher 9, z.B. einem EEPROM hinterlegt ist, mit welcher Drehrichtung des Geberrades 26 bzw. mit welcher Fahrtrichtung des Fahrzeugs die beiden logischen Zustände des ersten Ausgangssignals A1 des Sensorelements 2 verknüpft sind, kann aus dem Datenspeicher 6 eine vollständige Information zur aktuellen Drehrichtung des Geberrades 26 bzw. zur Fahrtrichtung des Fahrzeugs abgerufen werden, ohne daß es einer weiteren Interpretation durch Einrichtungen der Datenerfassungseinrichtung 29 bedarf. Nach dem Einbau des Gebers 1 in das Fahrzeug kann eine solche Zuordnung bei der Initialisierung des aus dem Geber 1 und der Datenerfassungseinrichtung 29 bestehenden Systems durch eine entsprechende Programmierung des nicht flüchtigen Speichers 9 festgelegt werden. Durch diese Option kann der Anwender die vom Geber 1 gelieferten Informationen auf relativ einfache Weise der für ihn geltenden Meßanordnung anpassen. Auch für den Hersteller der Geber hat die sich daraus ergebene Flexibilität den Vorteil, daß nicht eine Vielzahl verschiedener Gebertypen im Produktionsprogramm vorgesehen werden müssen.

## Patentansprüche

1. Elektrischer Geber (1) mit einem Sensorelement (2) zur Erfassung einer Bewegung eines vor dem Sensorelement (2) angeordneten Gegenstandes, wobei das Sensorelement (2) ein erstes Ausgangssignal (A1) bereitstellt, das zwei logische Zustände (L und H) besitzt, wobei der erste Zustand (L oder H) bei der ersten Bewegungsrichtung und der zweite Zustand (H oder L) bei der dazu entgegengesetzten Bewegungsrichtung des Gegenstandes angenommen wird,
**dadurch gekennzeichnet,**
a) daß der Geber (1) zumindest durch eine Leitung (31) für seine Betriebsspannung (UB) und über eine Datenleitung (D) mit einer Datenerfassungseinrichtung (29) verbunden ist,
b) daß im Geber (1) eine logische Schaltung vorgesehen ist, in der hinterlegt ist, welchen Bewegungsrichtungen des vor dem Sensorelement (2) angeordneten Gegenstandes die logischen Zustände (L und H) des ersten Ausgangssignals (A1) des Sensorelements (2) zugeordnet sind,
c) daß der Leitung (31) für die Betriebsspannung (UB) des Gebers (1) während einem der beiden Zustände (L oder H) des ersten Ausgangssignals (A1) des Sensorelements (2) im Geber (1) eine elektrische Last (R) zugeschaltet wird, die den vom Geber (1) aufgenommenen Strom (IG) gegenüber dem anderen Zustand (H oder L) sprunghaft um einen zusätzlichen Strom (ID) erhöht und
d) daß die logische Schaltung der Datenerfassungseinrichtung (29) über die Datenleitung (D) mitteilt, welche Bedeutung der erhöhte Strom (IG + ID) auf der Leitung (31) für die Betriebsspannung (UB) des Gebers (1) hat.

2. Elektrischer Geber (1) nach Anspruch 1,
**dadurch gekennzeichnet,**
**daß** der vor dem Sensorelement (2) angeordnete Gegenstand ein Geberrad (26) ist, das aufgrund seiner Gestaltung während seiner Rotation im Sensorelement (2) eine Folge elektrischer Impulse generiert, die vom Sensorelement (2) als ein zweites zur Drehgeschwindigkeit proportionales Ausgangssignal (A2) ausgegeben werden.

3. Elektrischer Geber (1) nach einem der vorangegangenen Ansprüche,
**dadurch gekennzeichnet,**
**daß** die im Geber (1) vorgesehene logische Schaltung der Datenerfassungseinrichtung (29) über die Datenleitung (D) Informationen darüber zugänglich macht,
• ob ein erstes Ausgangssignal (A1) des Sensorelements (2) vorhanden ist und
• ob im Fall des Vorhandenseins des erstes Ausgangssignals (A1) auch das zweite Ausgangssignal (A2) vorhanden ist.

4. Elektrischer Geber (1) nach einem der vorangegangenen Ansprüche,
**dadurch gekennzeichnet,**
**daß** die im Geber (1) vorgesehene logische Schaltung den Zeitpunkt protokolliert, zu dem ein bestimmter Zustand (L oder H) des ersten Ausgangssignals (A1) des Sensorelementes (2) vorliegt.

5. Elektrischer Geber (1) nach einem der vorangegangenen Ansprüche,
**dadurch gekennzeichnet,**
**daß** die im Geber (1) vorgesehene logische Schaltung ein Mikrocontroller (5) ist,
• der das erste Ausgangssignal (A1) des Sensorelements (2) erfaßt,
• der die Information aus dem ersten Ausgangssignal (A1) in einem Datenspeicher (6) speichert,
• der den erhöhten Strom (IG + ID), der sich auf der Leitung (31) für die Betriebsspannung (UB) des Gebers (1) bei einem der beiden Zustände (L oder H) des ersten Ausgangssignals (A1) des Sensorelements (2) durch die Last (R) einstellt, mit einer Information über die Drehrichtung des Geberrades (26) verknüpft,
• und der diese Information auf Anforderung durch die mit dem Geber (1) verbundene Datenerfassungseinrichtung (29) über die Datenleitung (D) an die Datenerfassungseinrichtung (29) sendet.

6. Elektrischer Geber (1) nach Anspruch 5,
**dadurch gekennzeichnet, daß** der Mikrocontroller (5)
• auch das zweite Ausgangssignal (A2) des Sensorelements (2) erfaßt,
• ermittelt, wieviele Impulse pro Zeiteinheit im zweiten Ausgangssignal (A2) des Sensorelements (2) enthalten sind,
• diese aus dem zweiten Ausgangssignal (A2) des Sensorelements (2) gewonnene Information in dem Datenspeicher (6) speichert und
• diese Information auf Anforderung durch die mit dem Geber (1) verbundene Datenerfassungseinrichtung (29) über die Datenleitung (D) an die Datenerfassungseinrichtung (29) sendet.

7. Elektrischer Geber (1) nach den Ansprüchen 5 oder 6,
**dadurch gekennzeichnet,**
**daß** der Mikrocontroller (5) die Information aus dem ersten Ausgangssignal (A1) nur dann im Datenspeicher (6) speichert, wenn auch das zweite Ausgangssignal (A2) vorhanden ist.

8. Elektrischer Geber (1) nach Anspruch 5 oder einem der nachfolgenden Ansprüche,
**dadurch gekennzeichnet,**
**daß** die Aufschaltung der Last (R) durch ein mit dem Mikrocontroller (5) verbundenes und von ihm steuerbares Schaltelement (V1) erfolgt.

9. Elektrischer Geber (1) nach Anspruch 5 oder einem der nachfolgenden Ansprüche,
**dadurch gekennzeichnet,**
**daß** parallel zu einem ersten Widerstand (R1) ein mit einem zweiten Widerstand (R2) verbundener, durch den Mikrocontroller (5) steuerbarer, selbstleitender Feldeffekt-Transistor (V2) in Öffnerfunktion vorgesehen ist, damit die Information über die Bewegungsrichtung des vor dem Sensorelement (2) angeordneten Gegenstandes auf der Leitung (31) für die Betriebsspannung (UB) des Gebers (1) auch bei Ausfall des am Feldeffekt-Transistor (V2) anliegenden Steuersignals des Mikrocontrollers (5) bestehen bleibt.

10. Elektrischer Geber (1) nach Anspruch 8 oder 9,
**dadurch gekennzeichnet,**
**daß** der Mikrocontroller (5) gegebenenfalls nach Invertierung der tatsächlich an ihm anliegenden logischen Zustände (L oder H) des ersten Ausgangssignals (A1) des Sensorelements (2) die von ihm steuerbare Last (R, R2) durch denjenigen logischen Zustand (L oder H) zuschaltet, der aufgrund seiner Verknüpfung mit der Bewegungsrichtung des vor dem Sensorelement (2) angeordneten Gegenstandes über die kürzere Betriebsdauer anliegt.

11. Elektrischer Geber (1) nach einem der vorangegangenen Ansprüche,
**dadurch gekennzeichnet,**
**daß** die mit dem Geber (1) verbundene Datenerfassungseinrichtung (29) ein Kontrollgerät für Nutzfahrzeuge, insbesondere ein Fahrtschreiber ist.

## Claims

1. Electric sensor (1) with a sensor element (2) for sensing a movement of an object which is arranged in front of the sensor element (2), the sensor element (2) making available a first output signal (A1) which has two logic states (L and H), the first state (L or H) being assumed in the first direction of movement, and the second state (H or L) being assumed in the opposite direction of movement of the object, **characterized**
a) in that the sensor (1) is connected to a data acquisition device (29), at least by means of a line (31) for its operating voltage (UB) and via a data line (D),
b) in that a logic circuit is provided in the sensor (1), in which logic circuit information is stored indicating to which directions of movement of the object arranged in front of the sensor element (2) the logic states (L and H) of the first output signal (A1) of the sensor element (2) are assigned,
c) in that, during one of the two states (L or H) of the first output signal (A1) of the sensor element (2) in the sensor (1), an electrical load (R) which increases the current (IG) drawn by the sensor (1) in comparison with the other state (H or L) suddenly by an additional current (ID) is connected to the line (31) for the operating voltage (UB) of the sensor (1), and
d) in that the logic circuit informs the data acquisition device (29), via the data line (D), of the significance which the increased current (IG + ID) on the line (31) for the operating voltage (UB) of the sensor (1).

2. Electric sensor (1) according to Claim 1, **characterized in that** the object which is arranged in front of the sensor element (2) is a sensor wheel (26) which, owing to its configuration during its rotation in the sensor element (2), generates a sequence of electrical pulses which are output by the sensor element (2) as a second output signal (A2) which is proportional to the rotational speed.

3. Electric sensor (1) according to one of the preceding claims, **characterized in that** the logic circuit which is provided in the sensor (1) allows the data acquisition device (29) to access, via the data line (D), information indicating
• whether a first output signal (A1) of the sensor element (2) is present, and
• if the first output signal (A1) is present, whether a second output signal (A2) is also present.

4. Electric sensor (1) according to one of the preceding claims, **characterized in that** the logic circuit which is provided in the sensor (1) logs the time at which a specific state (L or H) of the first output signal (A1) of the sensor element (2) is present.

5. Electric sensor (1) according to one of the preceding claims, **characterized in that** the logic circuit which is provided in the sensor (1) is a microcontroller (5),
• which senses the first output signal (A1) of the sensor element (2),
• which stores the information from the first output signal (A1) in a data memory (6),
• which links the increased current (IG + ID) which occurs on the line (31) for the operating voltage (UB) of the sensor (1) in one of the two states (L or H) of the first output signal (A1) of the sensor element (2) as a result of the load, to information about the direction of rotation of the sensor wheel (26),
• and which transmits this information when requested by the data acquisition device (29) connected to the sensor (1) to the data acquisition device (29) via the data line (D).

6. Electric sensor (1) according to Claim 5, **characterized in that** the microcontroller (5)
• also senses the second output signal (A2) of the sensor element (2)
• determines how many pulses per time unit the second output signal (A2) of the sensor element (2) contains,
• stores this information acquired from the second output signal (A2) of the sensor element (2) in the data memory (6), and
• transmits this information, when requested by the data acquisition device (29) connected to the sensor (1), to the data acquisition device (29) via the data line (D) .

7. Electric sensor (1) according to Claims 5 or 6, **characterized in that** the microcontroller (5) stores the information from the first output signal (A1) in the data memory (6) only if the second output signal (A2) is also present.

8. Electric sensor (1) according to Claim 5 or one of the following claims, **characterized in that** the connection of the load (R) into the circuit is carried out by means of a switching element (V1) which is connected to the microcontroller (5) and can be controlled by it.

9. Electric sensor (1) according to Claim 5 or one of the following claims, **characterized in that** the normally-on field-effect transistor (V2) which is connected to a second resistor (R2) and can be controlled by means of the microcontroller (5) is connected in its break output operation in parallel with a first resistor (R1), so that the information relating to the direction of movement of the object arranged in front of the sensor element (2) remains on the line (31) for the operating voltage (UB) of the sensor (1) even if the control signal of the microcontroller (5) which is present on the field-effect transistor (V2) fails.

10. Electric sensor (1) according to Claim 8 or 9, **characterized in that**, if appropriate after inversion of the logic states (L or H) of the first output signal (A1) of the sensor element (2) which are actually present at the microcontroller (5), said microcontroller (5) connects into the circuit the load (R, R2) which can be controlled by it, by means of that logic state (L or H) which is present over the shorter operating period owing to the linking of said logic state (L or H) to the direction of movement of the object which is arranged in front of the sensor element (2).

11. Electric sensor (1) according to one of the preceding claims, **characterized in that** the data acquisition device (29) which is connected to the sensor (1) is a monitoring device for utility vehicles, in particular a tachograph.

## Revendications

1. Capteur électrique (1 ) comportant un élément détecteur (2), destiné à détecter un mouvement d'un objet disposé devant l'élément détecteur (2), l'élément détecteur (2) délivrant un premier signal de sortie (A1 ), qui a deux états logiques (L et H), le premier état (L ou H) se présentant dans le cas de la première direction du mouvement et le deuxième état (H ou L) se présentant dans le cas de la direction opposée du mouvement de l'objet,
**caractérisé par le fait**
a) que le capteur (1) est relié à un dispositif de saisie de données (29) au moins par un conducteur (31) destiné à la tension de service (UB) et par un conducteur de données (D),
b) qu'il est prévu, dans le capteur (1 ), un circuit logique dans lequel est déposé à quelles directions du mouvement de l'objet disposé devant l'élément détecteur (2) correspondent les états logiques (L et H) du premier signal de sortie (A1) de l'élément détecteur (2),
c) que, sur le conducteur (31 ) destiné à la tension de service (UB) du capteur (1), pendant l'un des deux états (L ou H) du premier signal de sortie (A1) de l'élément détecteur (2), une charge électrique (R) est ajoutée dans le capteur (1), laquelle fait augmenter brusquement, par rapport à l'autre état (H ou L), le courant absorbé (IG) par le capteur (1) d'un courant supplémentaire (ID) et
d) que le circuit logique communique, par l'intermédiaire du conducteur de données (D), au dispositif de saisie de données (29) quelle est la signification du courant plus élevé (IG + ID) qui circule sur le conducteur (31) destiné à la tension de service (UB) du capteur (1).

2. Capteur électrique (1 ) selon la revendication 1
**caractérisé par le fait**
**que** l'objet disposé devant l'élément détecteur (2) est une roue de captage (26) qui génère, en raison de sa conception, pendant sa rotation, une suite d'impulsions électriques d ans l'élément détecteur (2), laquelle est émise par l'élément détecteur en tant que deuxième signal de sortie (A2) proportionnel à la vitesse de rotation.

3. Capteur électrique (1 ) selon l'une des revendications précédentes
**caractérisé par le fait**
**que** le circuit logique prévu dans le capteur (1) fait parvenir, par l'intermédiaire du conducteur de données (D), des informations au dispositif de saisie de données (29) indiquant
• s'il existe un premier signal de sortie (A1 ) de l'élément détecteur (2) et
• si, dans le cas de l'existence du premier signal de sortie (A1), le deuxième signal de sortie (A2) existe également.

4. Capteur électrique (1 ) selon l'une des revendications précédentes
**caractérisé par le fait**
**que** le circuit logique prévu dans le capteur (1) établit un protocole concernant l'instant auquel il existe un état déterminé (L ou H) du premier signal de sortie (A1) de l'élément détecteur (2).

5. Capteur électrique (1 ) selon l'une des revendications précédentes
**caractérisé par le fait**
**que** le circuit logique prévu dans le capteur (1) est un microcontrôleur (5)
• qui détecte le premier signal de sortie (A1) de l'élément détecteur (2),
• qui mémorise l'information provenant d'un premier signal de sortie (A1 ) dans une mémoire de données (6),
• qui couple le courant plus élevé (IG + ID), qui s'établit, en raison de la charge (R), sur le conducteur (31) destiné à la tension de service (UB) du capteur (1), en présence de l'un des deux états (L ou H) du premier signal de sortie (A1) de l'élément détecteur (2), à une information relative au sens de rotation de la roue de captage (26)
• et qui e nvoie cette i nformation, s ur sollicitation d u dispositif d e saisie d e données (29) relié au capteur (1), par l'intermédiaire du conducteur de données (D), au dispositif de saisie de données (29).

6. Capteur électrique (1) selon la revendication 5
**caractérisé par le fait que** le microcontrôleur (5)
• détecte également le deuxième signal de sortie (A2) de l'élément détecteur (2),
• détermine combien d'impulsions par unité de temps se trouvent dans le deuxième signal de sortie (A2) de l'élément détecteur (2),
• mémorise cette information obtenue à partir du deuxième signal de sortie (A2) de l'élément détecteur (2) dans la mémoire de données (6) et
• envoie cette information, sur sollicitation du dispositif de saisie de données (29) relié au capteur (1 ), par l'intermédiaire du conducteur de données (D), au dispositif de saisie de données (29).

7. Capteur électrique (1 ) selon la revendication 5 ou 6
**caractérisé par le fait**
**que** le microcontrôleur (5) ne mémorise, dans la mémoire de données (6), l'information provenant du premier signal de sortie (A1) que si le deuxième signal de sortie (A2) existe également.

8. Capteur électrique (1) selon la revendication 5 ou l'une des revendications suivantes
**caractérisé par le fait**
**que** la connexion supplémentaire de la charge (R) est effectuée par un élément connecteur (V1) relié au microcontrôleur (5) et contrôlé par celui-ci.

9. Capteur électrique (1) selon la revendication 5 ou l'une des revendications suivantes
**caractérisé par le fait**
**que**, en parallèle avec une première résistance (R1 ), il est prévu un transistor à effet de champ (V2), relié à une deuxième résistance (R2), contrôlé par le microcontrôleur (5) et autoconducteur en fonction passante, afin que l'information concernant la direction du mouvement de l'objet disposé devant l'élément détecteur (2) soit maintenue sur le conducteur (31) destiné à la tension de service (UB) du capteur (1), même en cas de défaillance du signal de commande du microcontrôleur (5) appliqué au transistor à effet de champ (V2).

10. Capteur électrique (1) selon la revendication 8 ou 9
**caractérisé par le fait**
**que** le microcontrôleur (5), le cas échéant après inversion des états logiques (L ou H) du premier signal de sortie (A1) de l'élément détecteur (2), qui sont effectivement appliqués au microcontrôleur (5), connecte en supplément la charge (R, R2), qu'il contrôle, grâce à l'état logique (L ou H) qui est appliqué pendant la durée de service la plus courte en raison de son couplage avec la direction du mouvement de l'objet disposé devant l'élément détecteur (2).

11. Capteur électrique (1 ) selon l'une des revendications précédentes
**caractérisé par le fait**
**que** le dispositif de saisie de données (29) relié au capteur (1) est un appareil de contrôle pour véhicules utilitaires, notamment un contrôleur de marche (ou mouchard).
